(19) Europäisches Patentamt
European Patent Office
Office européen des brevets

(11) Veröffentlichungsnummer: **0 074 566**
**B1**

# (12) EUROPÄISCHE PATENTSCHRIFT

(45) Veröffentlichungstag der Patentschrift: **22.05.85**

(51) Int. Cl.⁴: **C 08 K 5/34,** C 08 J 3/20, C 09 B 57/12, D 01 F 1/06

(21) Anmeldenummer: **82108042.1**

(22) Anmeldetag: **01.09.82**

## (54) Verfahren zum Färben von thermoplastischen Kunststoffen in der Masse.

(30) Priorität: **05.09.81 DE 3135328**

(43) Veröffentlichungstag der Anmeldung: **23.03.83 Patentblatt 83/12**

(45) Bekanntmachung des Hinweises auf die Patenterteilung: **22.05.85 Patentblatt 85/21**

(84) Benannte Vertragsstaaten: **CH DE FR GB IT LI**

(56) Entgegenhaltungen:
**CH - A - 517 154**
**DE - B - 1 049 821**

(73) Patentinhaber: **HOECHST AKTIENGESELLSCHAFT, Postfach 80 03 20, D-6230 Frankfurt am Main 80 (DE)**

(72) Erfinder: **Fuchs, Otto, Dr., Dr.-Model-Strasse 2, D-8221 Grabenstätt (DE)**
Erfinder: **Kroh, Adolf, Vorderstrasse 27, D-6251 Selters (DE)**
Erfinder: **Telge, Wolfgang, Unter den Nussbäumen 25, D-6233 Kelkheim (Taunus) (DE)**

**EP 0 074 566 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Verwendung von Naphthoylenbenzimidazolperidicarbonsäureimiden als Küpenfarbstoffe ist seit langem bekannt. In der DE-PS Nr. 1049821 ist es beschrieben, dass man mit solchen Farbstoffen Fasern oder Folien aus Polyestern, Polyacrylnitril oder Celluloseacetat aus wässeriger Lösung oder Suspension färben kann. Es wurde nun gefunden, dass man mit solchen Farbstoffen auch wasserunlösliche thermoplastische Kunststoffe in der Masse, beispielsweise in der Spinnmasse, färben kann.

Die Erfindung betrifft somit ein Verfahren zum Färben von wasserunlöslichen thermoplastischen Kunststoffen mit Verbindungen der Formel

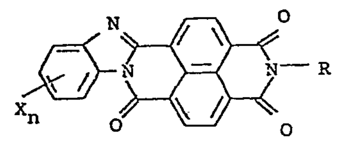

in der R Alkyl mit 3 bis 18 Kohlenstoffatomen, Hydroxyalkyl, Alkoxyalkyl, Hydroxyalkoxyalkyl, Alkoxyalkoxyalkyl, Carbalkoxyalkyl, Carboxyalkyl oder Phenylalkyl mit jeweils 1 bis 14 Kohlenstoffatomen im Alkyl- bzw. Alkoxyteil steht, X Halogen, Alkyl, Alkoxy, Acylamino, Acyl, Carboxy, Carbalkoxy, Carbamoyl, Mono- oder Dialkylcarbamoyl, Sulfamoyl, Mono- oder Dialkylsulfamoyl mit jeweils bis zu 8 Kohlenstoffatomen in den Resten, Nitro oder Cyan und n 0 oder eine ganze Zahl von 1 bis 3 bedeuten, wobei die Substituenten X gleich oder verschieden sind, das dadurch gekennzeichnet ist, dass man diese Verbindungen zur Schmelze des thermoplastischen Kunststoffs oder zu dessen Vorprodukten zugibt.

Im Folgenden werden bevorzugte Ausgestaltungen der Erfindung näher erläutert:

Bevorzugt sind Verbindungen der obengenannten Formel, im Folgenden kurz Farbstoffe genannt, deren Rest R eine unsubstituierte Alkylgruppe mit 4 bis 12, insbesondere 4 bis 8 Kohlenstoffatomen ist. Von den substituierten Alkylresten R sind solche bevorzugt, deren Alkyl- bzw. Alkoxyteile 1 bis 8 Kohlenstoffatome aufweisen, insbesondere solche Verbindungen, in denen R eine unverzweigte Alkylengruppe mit bis zu 5 Kohlenstoffatomen ist, an die eine Hydroxy, Carboxy- oder eine Alkoxygruppe mit bis zu 14, insbesondere bis zu 13 Kohlenstoffatomen gebunden ist, die ihrerseits wieder durch Hydroxy- oder niedere Alkoxygruppen substituiert sein kann.

Sofern die Farbstoffe Substituenten X tragen, sind solche bevorzugt, die einen oder zwei gleiche oder verschiedene Substituenten aus der Reihe Chlor, Brom, niederes Alkyl, niederes Alkoxy, niederes Alkanoylamino, niederes Alkanoyl, Carboxy, niederes Carbalkoxy, Carbamoyl, niederes Mono- oder Dialkylcarbamoyl, Sulfamoyl oder niederes Mono- oder Dialkylsulfamoyl, sowie Nitro oder Cyan tragen. Besonders bevorzugte Reste X sind Chlor, Brom, Methyl, Methoxy, Ethoxy, Acetyl, Carboxy, Carbomethoxy, Carboethoxy, Cyan, Nitro, Carbamoyl, Sulfamoyl sowie durch niedere Alkylgruppen mono- oder disubstituiertes Carbamoyl und Sulfamoyl.

Die Herstellung der Farbstoffe kann nach den Verfahren der DE-PS Nrn. 1005969 und 2246110 erfolgen.

Wasserunlösliche Thermoplasten, die erfindungsgemäss gefärbt werden können, sind beispielsweise Polymerisate des Styrols, der Acryl- und Methacrylsäure sowie ihrer niederen Alkylester, des Acrylnitrils, der Olefine wie Ethylen und Propylen sowie des Vinylchlorids und die entsprechenden Mischpolymerisate, wie beispielsweise Acrylnitril/Butadien/Styrol-Mischpolymerisate. Als Polykondensate kommen Polyamide und insbesondere lineare Polyester in Betracht. Als Polyadditionsprodukte seien Polyamide vom Typ des Polycaprolactams und Polyester vom Typ des Polycaprolactons genannt.

Besonders bevorzugte wasserunlösliche thermoplastische Kunststoffe, die erfindungsgemäss gefärbt werden, sind lineare Polyester, die durch Polykondensation von Glykolen wie Ethylenglykol, 1,4-Dihydroxybutan oder 1,4-Dimethylolcyclohexan und Terephthalsäure bzw. deren Estern erhalten werden.

Die Färbung der Kunststoffe in der Masse wird in an sich bekannter Weise durchgeführt, beispielsweise indem man die Farbstoffe auf den Kunststoff aufbringt und die Mischung miteinander verschmilzt oder indem man die Farbstoffe in die Schmelze des fertigen Kunststoffs oder eines Vorprodukts einbringt oder einem niedermolekularen Vorprodukt des Kunststoffs vor oder während der Synthese des Thermoplasten zusetzt.

Bei der Herstellung heller Farbtöne kann man den Farbstoff dem in Form eines Granulats oder in Form von Chips vorliegenden Kunststoff zumischen (Panierverfahren) und diese Mischung dann erhitzen und zum Schmelzen bringen, wobei sich der Farbstoff in dem Kunststoff löst. Der Herstellung tiefer Farbtöne steht bei diesem Verfahren entgegen, dass die Kunststoffgranulate bzw. -chips aufgrund ihrer geringen Oberfläche nur eine relativ geringe Menge an Farbstoff vertragen, da es andernfalls leicht zur Entmischung und zum Stauben bei der Handhabung des panierten Granulats kommt.

Nicht nur helle, sondern auch sehr farbtiefe Färbungen lassen sich erzielen, wenn man den Farbstoff in Form eines griess- oder granulatförmigen Konzentrats (Präparats) dem zu färbenden Kunststoff, beispielsweise dem Granulat oder der Schmelze, zugibt. Diese Farbmittelkonzentrate *(master-batches)* bestehen aus einem geeigneten Trägermaterial und wechselnden, zum Teil überwiegenden Mengen an Farbstoff. Geeignete Trägermaterialien sind beispielsweise niedermolekulares Polyethylen oder Polypropylen, pulverförmige Polyamide oder auch Polyalkylenglykole, je nach dem, welcher Kunststoff eingefärbt werden soll. Da beispielsweise Polyethylene oder Polyethylenwachse mit Polyestern nur unzureichend verträglich sind, wird man dementsprechend bei der Einfärbung thermoplastischer Polyester in der Masse als Umhüllungspolymer für die Farbstoffe

aliphatische Polyester mit einem Schmelzpunkt im Bereich von etwa 60 bis 120°C einsetzen, beispielsweise Polyester vom Typ der Poly-ε-caprolactone mit einem Molgewicht von etwa 1000 bis 50 000 oder lineare aliphatische Polyester, die sich von linearen aliphatischen Dicarbonsäuren mit 6 bis 12 Kohlenstoffatomen und aliphatischen und/oder cycloaliphatischen Glykolen ableiten, wie beispielsweise Poly(ethylenglykoladipat), Poly-(ethylenglykolsebacat), Poly(ethylenglykoldekandicarboxylat) und Poly(cyclohexan-1,4-dioladipat) mit Molgewichten von etwa 2000 bis 15 000.

Die Herstellung solcher Farbstoffkonzentrate kann in an sich bekannter Weise erfolgen, beispielsweise mit Hilfe eines Kneters, in welchem man den Farbstoff mit dem Träger bei einer geeigneten Temperatur, bei der der aufgeschmolzene Träger eine ausreichend hohe Viskosität aufweist, vermischt bzw. gegebenenfalls den Farbstoff in dem Trägermaterial löst. Diese Master-Batches stauben nicht und erlauben es, den Kunststoff auch in sehr hohen Farbtiefen einzufärben.

Wenn der thermoplastische Kunststoff bereits bei seiner Herstellung eingefärbt werden soll, gibt man den Farbstoff direkt oder in Form eines Master-Batch der Polymerisations-, Polyadditions- bzw. Polykondensationsmasse vor oder während der Herstellung des Polymers zu. Im Falle der Herstellung eines Polyesters wird der Farbstoff vorzugsweise in dem Ausgangsglykol dispergiert.

Die nach einem der vorstehend genannten Verfahren in der Masse gefärbten Kunststoffe lassen sich nach üblichen Methoden weiterverformen und verarbeiten, beispielsweise im Spritzguss, in Spinnverfahren oder in der Folienherstellung.

Die Menge des eingesetzten Farbstoffs richtet sich nach der gewünschten Farbtiefe und liegt im allgemeinen bei etwa 0,05 bis 3 Gew.-%, bezogen auf das Gewicht des gefärbten thermoplastischen Materials. Die erfindungsgemäss einzusetzenden Farbstoffe zeigen nicht nur die hierfür erforderliche hohe Löslichkeit, sondern auch die geforderte Thermostabilität, die bei solchen Verfahren unabdingbar ist.

Da sich die erfindungsgemäss zu verwendenden Farbstoffe in den thermoplastischen Kunststoffen lösen und somit molekular-dispers verteilen, treten keine Probleme hinsichtlich der Festigkeit und Verstreckbarkeit beim Herstellen von Fäden und Folien auf. Im Vergleich zur Färbung mit Pigmenten entfällt beim erfindungsgemässen Verfahren die erforderliche Feinverteilung des Pigments und es kommt zu keinem Abrieb und zu keinen Verstopfungen der Düsen und Filter.

Ein besonders bevorzugtes erfindungsgemässes Verfahren ist die Spinnfärbung thermoplastischer Kunststoffe, insbesondere von Polyestern. Beim Verspinnen auf einer Extrusionsspinnanlage kann hierbei der Farbstoff unmittelbar in die Schmelze des Kunststoffs eindosiert werden, zweckmässig über eine Seitenschnecke, vorzugsweise in Form eines geschmolzenen Konzentrats. Hierbei erfolgt eine homogene Vermischung unter Lösung des Farbstoffs im Polymer. Ebenso kann man beim Verspinnen auf einer Rostspinnanlage verfahren. Geschmolzene Master-Batches können vorteilhaft auch unmittelbar der Polymerschmelze direkt vor der Spinndüse zugeführt werden (Injektionsverfahren). Durch diese Verfahrensweise lassen sich Verunreinigungen der Spinnanlage durch den Farbstoff vermeiden, so dass ohne grossen Aufwand im Farbton oder in der Farbtiefe unterschiedliche Einfärbungen vorgenommen werden können.

Bei dem erfindungsgemässen Verfahren erhält man farbstarke, brillante grünstichig-gelbe bis rotbraune Färbungen, die eine hervorragende Licht-, Wetter-, Reib- und Thermofixierechtheit aufweisen, was im Hinblick auf die gute Polymerlöslichkeit der Farbstoffe überraschend ist. Besonders vorteilhaft ist, dass die Farbstoffe die Viskosität der Spinnschmelzen auch bei farbtiefen Einfärbungen nicht beeinträchtigen, so dass die Fäden und Folien in der Festigkeit und Dehnfähigkeit nicht beeinträchtigt werden.

In den folgenden Beispielen wird die Erfindung näher erläutert. Teile und Prozentangaben beziehen sich auf das Gewicht, sofern nichts anderes angegeben ist.

*Beispiel 1:*

1 Teil Farbstoff der Formel

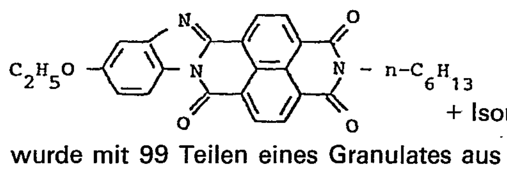

+ Isomeres

wurde mit 99 Teilen eines Granulates aus Poly-1,4-dimethylolcyclohexanterephthalat gemischt und auf eine Temperatur von 270 bis 290°C aufgeschmolzen, wobei sich eine homogene Lösung des genannten Farbstoffs in der Schmelze bildete. Diese gefärbte Schmelze wurde im Schmelzspinnverfahren zu Polyesterfäden versponnen, die eine brillante, rotbraune Nuance zeigen und sich durch eine sehr gute Thermofixier- und Lichtechtheit auszeichnen.

*Beispiele 2 bis 5:*

Man verfuhr, wie in Beispiel 1 beschrieben, verwendete jedoch einen der Farbstoffe der folgenden allgemeinen Formel

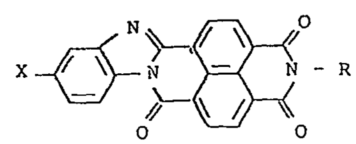

+ Isomeres

Man erhielt ebenfalls sehr brillante Färbungen mit sehr guten Echtheiten.

*(Tabelle auf der nächsten Seite)*

*Beispiel 6:*

10 Teile der Verbindung der Formel

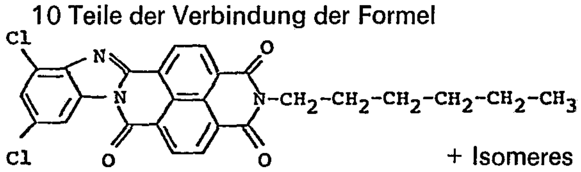

+ Isomeres

| Beispiel | X | R | Nuance |
|---|---|---|---|
| 2 | $-CH_3$ | $CH_2-CH_2-CH_2-O-CH_2-CH_2-CH_2-CH_3$ | orange |
| 3 | $-COOH$ | 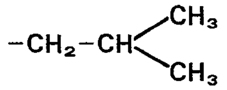 | grünstichig-gelb |
| 4 | $-CONH-CH_2-CH_2-CH_2-CH_3-$ | $-CH_2-CH_2-CH_2-O-(CH_2)_7-CH_3$ | gelb |
| 5 | $-NO_2$ | $CH_2-CH_2-CH_2-CH_2-CH_2-CH_2-CH_2-CH_3$ | grünstichig-gelb |

wurden mit 90 Teilen Ethylenglykol mittels eines Schnellrührers 30 min lang angeteigt. 5 Teile dieser Paste wurden mit 95 Teilen Bis-(β-hydroxyethyl)terephthalat vermischt und 6 h lang bei einer Temperatur zwischen 270 und 280°C im Hochvakuum erhitzt, wobei die Kondensation zum Polyester erfolgte. Die so erhaltene gefärbte Schmelze wurde abgekühlt und in üblicher Weise granuliert.

Die gefärbte Polyestermasse kann nach den üblichen Verfahren zu geformten Gebilden verschiedenster Art, beispielsweise im Spritzguss oder im Schmelzspinnverfahren, weiterverarbeitet werden. Man erhält insbesondere bei der Verarbeitung zu Fäden brillante, gelbe Färbungen, die eine sehr gute Thermofixier- und Lichtechtheit aufweisen.

*Beispiel 7:*

2,5 Teile einer Präparation von 40 Teilen der Verbindung

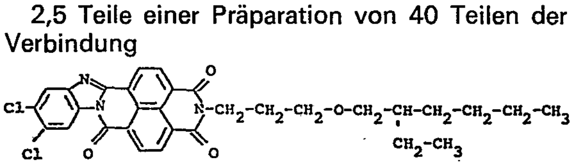

und 60 Teilen eines Trägermaterials als Umhüllungspolymer wurden mit 97,5 Teilen Polyethylenglykolterephthalat gemischt und nach einem für Polyestermaterialien üblichen Schmelzspinnverfahren zu Filamentgarn versponnen. Das so erhaltene Fadenmaterial zeichnet sich durch einen brillanten, gelben Farbton mit ausgezeichneten Echtheitseigenschaften aus.

Das verwendete Präparat wurde folgendermassen hergestellt: Das Farbmittel und das Trägermaterial wurden miteinander vermischt, sodann zusammen aufgeschmolzen, extrudiert, über einen Doppelschneckenextruder ausgetragen und anschliessend granuliert. Als Trägermaterial wurde ein Isophthalsäure/Terephthalsäure-Copolyester mit Ethylenglykol eingesetzt.

Als Trägermaterialien eignen sich auch Isophthalsäure/Terephthalsäure-Copolyester mit Neopentylglykol und andere Polyester und Polyamide, beispielsweise ein Poly-ε-caprolacton, Poly(ethylenglykoladipat), Poly(ethylenglykolsebacat), Poly(ethylenglykoldecandicarboxylat), Poly(cyclohexandioladipat).

*Beispiele 8 bis 54:*

Man verfuhr, wie in einem der Beispiele 1, 6 oder 7 beschrieben, verwendete jedoch anstelle der dort beschriebenen Farbstoffe eine der in der nachfolgenden Tabelle angegebenen Verbindungen der folgenden allgemeinen Formel

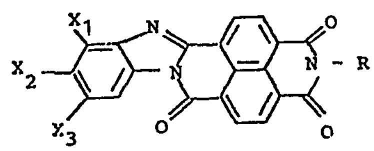

im Falle der Möglichkeit der Isomerenbildung bei der Kondensation, im Gemisch mit dem entsprechenden Isomeren. Man erhielt jeweils eine gefärbte Polymermasse bzw. gefärbte Fäden in den in der Tabelle angegebenen Farbtönen mit ebenso guten anwendungstechnischen Eigenschaften und Echtheiten.

| Beispiel | $X_1$ | $X_2$ | $X_3$ | R | Nuance |
|---|---|---|---|---|---|
| 8 | H | Cl | Cl | $(CH_2)_3-O-n-C_{13}H_{27}$ | gelb |
| 9 | H | Cl | H | $(CH_2)_3-O-n-C_4H_9$ | gelb |
| 10 | H | $NO_2$ | H | $(CH_2)_3-O-n-C_4H_9$ | grünstichig-gelb |
| 11 | H | $OCH_3$ | H | $n-C_6H_{13}$ | rotbraun |
| 12 | H | Cl | H | $n-C_6H_{13}$ | gelb |
| 13 | H | COOH | H | $n-C_6H_{13}$ | gelb |
| 14 | H | COOH | H | $(CH_2)_3-O(CH_2)_2-O-n-C_4H_9$ | gelb |
| 15 | H | $CH_3$ | H | $CH_2-CH(CH_3)_2$ | orange |
| 16 | H | $CH_3$ | H | $n-C_6H_{13}$ | orange |
| 17 | H | $CH_3$ | H | $(CH_2)_3-O-(CH_2)_2-O-n-C_4H_9$ | orange |
| 18 | H | H | H | $(CH_2)_3-O-(CH_2)_2-O-n-C_4H_9$ | gelb |
| 19 | H | H | H | $(CH_2)_3-O-n-C_4H_9$ | gelb |
| 20 | H | $COOCH_3$ | H | $(CH_2)_3-O-(CH_2)_4-OH$ | grünstichig-gelb |
| 21 | H | Cl | H | $(CH_2)_3-O-n-C_8H_{17}$ | gelb |
| 22 | H | H | H | $(CH_2)_3-O-(CH_2)_4-OH$ | gelb |
| 23 | H | Cl | H | $(CH_2)_3-O-CH_2-CH(C_2H_5)-n-C_4H_9$ | gelb |
| 24 | H | $CH_3$ | H | $(CH_2)_3-O-n-C_8H_{17}$ | orange |

| Beispiel | $X_1$ | $X_2$ | $X_3$ | R | Nuance |
|---|---|---|---|---|---|
| 25 | H | $CH_3$ | $CH_3$ | $(CH_2)_3-O-n-C_4H_9$ | orange |
| 26 | $CH_3$ | $CH_3$ | H | $(CH_2)_3-O-n-C_4H_9$ | orange |
| 27 | H | $CH_3$ | Cl | $(CH_2)_3-O-n-C_4H_9$ | rotstichig-gelb |
| 28 | H | $CH_3$ | H | $(CH_2)_3-O-n-C_{13}H_{27}$ | orange |
| 29 | H | CN | H | $n-C_8H_{17}$ | grünstichig-gelb |
| 30 | H | CN | H | $(CH_2)_3-O-n-C_8H_{17}$ | grünstichig-gelb |
| 31 | H | CN | H | $n-C_{12}H_{25}$ | grünstichig-gelb |
| 32 | H | $CONH_2$ | H | $(CH_2)_3-O-n-C_{13}H_{27}$ | gelb |
| 33 | H | $CON(CH_3)_2$ | H | $(CH_2)_3-O-(CH_2)_2-O-n-C_4H_9$ | gelb |
| 34 | H | Br | H | $n-C_8H_{17}$ | gelb |
| 35 | H | $COOC_2H_5$ | H | $n-C_6H_{13}$ | gelb |
| 36 | H | $SO_2NH_2$ | H | $(CH_2)_3-O-n-C_4H_9$ | orange |
| 37 | H | $CO-CH_3$ | H | $(CH_2)_3-O-n-C_8H_{17}$ | gelb |
| 38 | H | $SO_2NH-CH_3$ | H | $(CH_2)_3-O-n-C_4H_9$ | orange |
| 39 | H | $OC_2H_5$ | H | $(CH_2)_3-O-CH_2-CH_2-OH$ | rotbraun |
| 40 | H | $OC_2H_5$ | H | $(CH_2)_4-OH$ | rotbraun |
| 41 | H | $OC_2H_5$ | H | $(CH_2)_5-COOH$ | rotbraun |
| 42 | H | $OC_2H_5$ | H | $(CH_2)_3-O-CH_2-CH(C_2H_5)-n-C_4H_9$ | rotbraun |
| 43 | H | $OCH_3$ | H | $CH_2-CH(CH_3)_2$ | rotbraun |
| 44 | H | $OCH_3$ | H | $(CH_2)_3-O-(CH_2)_2-O-C_2H_5$ | rotbraun |
| 45 | H | $OC_2H_5$ | H | $(CH_2)_3-O-CH_3$ | rotbraun |
| 46 | Cl | H | Cl | $n-C_7H_{15}$ | gelb |
| 47 | Cl | H | Cl | $(CH_2)_3-O-CH_2-CH(C_2H_5)-n-C_4H_9$ | gelb |
| 48 | Cl | H | Cl | $CH_2-CH(CH_3)_2$ | gelb |
| 49 | H | Cl | Cl | $(CH_2)_3-O-CH_3$ | gelb |
| 50 | H | $CH_3$ | Cl | $n-C_{12}H_{15}$ | gelb |
| 51 | H | $CH_3$ | $CH_3$ | $(CH_2)_4-OH$ | orange |
| 52 | H | $CH_3$ | $CH_3$ | $n-C_4H_9$ | orange |
| 53 | $CH_3$ | $CH_3$ | H | $(CH_2)_3-O-(CH_2)_2-O-n-C_4H_9$ | orange |
| 54 | H | H | H | $(CH_2)_3-O-n-C_{13}H_{27}$ | gelb |

## Patentansprüche

1. Verfahren zum Färben von wasserunlöslichen thermoplastischen Kunststoffen mit Farbstoffen der allgemeinen Formel

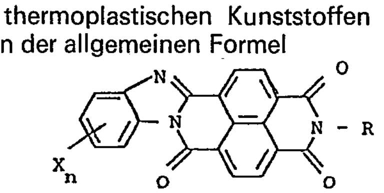

in der R Alkyl mit 3 bis 18 Kohlenstoffatomen, Hydroxyalkyl, Alkoxyalkyl, Hydroxyalkoxyalkyl, Alkoxyalkoxyalkyl, Carbalkoxyalkyl, Carboxyalkyl oder Phenylalkyl mit jeweils 1 bis 14 Kohlenstoffatomen im Alkyl- bzw. Alkoxyteil steht, X Halogen, Alkyl, Alkoxy, Acylamino, Acyl, Carboxy, Carbalkoxy, Carbamoyl, Mono- oder Dialkylcarbamoyl, Sulfamoyl, Mono- oder Dialkylsulfamoyl mit jeweils bis zu 8 Kohlenstoffatomen in den Resten, Nitro oder Cyan und n 0 oder eine ganze Zahl von 1 bis 3 bedeuten, wobei die Substituenten X gleich oder verschieden sind, dadurch gekennzeichnet, dass man diese Farbstoffe zur Schmelze des thermoplastischen Kunststoffs oder zu dessen Vorprodukten zugibt.

2. Verfahren nach Anspruch 1, dadurch gekennzeichnet, dass der Kunststoff ein linearer Polyester ist.

3. Verfahren nach den Ansprüchen 1 und 2, dadurch gekennzeichnet, dass man den Farbstoff einer Spinnmasse zusetzt.

4. Gefärbter wasserunlöslicher, thermoplastischer Kunststoff, erhalten nach einem Verfahren gemäss den Ansprüchen 1 bis 3.

## Claims

1. A process for coloring water-insoluble thermoplastic plastics with dyestuffs of the general formula

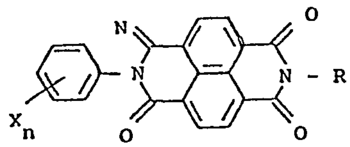

in which R denotes alkyl having 3 to 18 carbon atoms, hydroxyalkyl, alkoxyalkyl, hydroxyalkoxyalkyl, alkoxyalkoxyalkyl, carbalkoxyalkyl, carboxyalkyl or phenylalkyl having in each case 1 to 14 carbon atoms in the alkyl and alkoxy part respectively, X denotes halogen, alkyl, alkoxy, acylamino, acyl, carboxyl, carbalkoxy, carbamoyl, mono- or dialkylcarbamoyl, sulfamoyl, mono- or dialkylsulfamoyl having in each case up to 8 carbon atoms in the radicals, nitro or cyano, and n is 0 or an integer from 1 to 3, with the X substituents being identical or different, which comprises adding these dyestuffs to the melt of the thermoplastic plastic or to its precursors.

2. The process as claimed in Claim 1, wherein the plastic is a linear polyester.

3. The process as claimed in Claims 1 and 2, wherein the dyestuff is added to a spinning composition.

4. A colored water-insoluble thermoplastic plastic, obtained by one of the processes as claimed in Claims 1 to 3.

## Revendications

1. Procédé pour teindre des matières thermoplastiques insolubles dans l'eau avec des colorants répondant à la formule générale

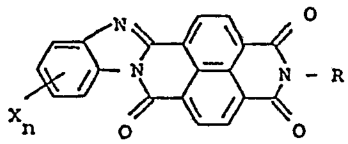

dans laquelle R représente un alkyle contenant de 3 à 18 atomes de carbone ou un hydroxyalkyle, un alkoxyalkyle, un hydroxyalkoxyalkyle, un alkoxyalkoxyalkyle, un alkoxycarbonylalkyle, un carboxyalkyle ou un phénylalkyle contenant chacun de 1 à 14 atomes de carbone dans la partie alkyle ou la partie alkoxy, X représente un halogène ou un acyle, un alkoxy, un acylamino, un alkyle, un carboxy, un alkoxycarbonyle, un carbamoyle, un mono- ou dialkylcarbamoyle, un sulfamoyle, un mono- ou dialkylsulfamoyle contenant chacun au plus 8 atomes de carbone dans les radicaux, ou encore un nitro ou un cyano, et n représente un nombre entier de 0 à 3, les substituants X pouvant être identiques ou différents, procédé caractérisé en ce qu'on ajoute ces colorants à la masse fondue de la matière thermoplastique ou de ses précurseurs.

2. Procédé selon la revendication 1, caractérisé en ce que la matière plastique est un polyester linéaire.

3. Procédé selon les revendications 1 et 2, caractérisé en ce qu'on ajoute le colorant à une masse de filage.

4. Matière thermoplastique insoluble dans l'eau, teinte, qui a été obtenue par un procédé selon l'une des revendications 1 à 3.